# EUROPÄISCHE PATENTANMELDUNG

(11) **EP 1 422 201 A2**
(43) Veröffentlichungstag der Anmeldung: **26.05.2004**
(21) Anmeldenummer: 02758989.4
(22) Anmeldetag: 02.07.2002
(51) Int. Cl.: C03B 33/09, B23K 26/00

(54) **SCHNEIDVERFAHREN FÜR SPRÖDE NICHTMETALLMATERIALIEN (ZWEI VARIANTEN)**

(30) Priorität: 25.07.2001 RU 2001120746; 25.07.2001 RU 2001120747; 15.08.2001 RU 2001122793; 07.06.2002 RU 2002114928; 07.06.2002 RU 2002114927
(71) Anmelder: KONDRATENKO, Vladimir Stepanovich, Moscow, 111402 (RU)
(72) Erfinder: KONDRATENKO, Vladimir Stepanovich, Moscow, 111402 (RU)
(74) Vertreter: Schaller, Renate
(86) Internationale Anmeldenummer: PCT/RU2002/000318
(87) Internationale Veröffentlichungsnummer: WO 2003/010102

(57) **Zusammenfassung**

Der hier vorgestellten Erfindung wurde die Aufgabe zu Grunde gelegt, die Schneideleistung und Schneidequalität bei der Bearbeitung von spröden NE-Werkstoffen zu verbessern.

Bei der ersten Variante basiert die Aufgabenlösung darauf, dass das Schneideverfahren von spröden NE-Werkstoffen mit Schnittlinieneinschnitt sowie zusätzlicher Einwirkung auf die Werkstoffoberfläche sich dadurch auszeichnet, dass die zusätzliche Einwirkung auf die Werkstoffoberfläche im Einschnittbereich mit mindestens einer Quelle elastischer Wellen erfolgt, wobei die Wellenamplitude und -frequenz mit der Vorgabe gewählt werden, den Einschnitt um das Sollmaß zu vertiefen oder einen durchgehenden Schnitt auszuführen.

Bei der zweiten Variante basiert die Aufgabenlösung darauf, dass der Einschnitt durch Erwärmung der Werkstoffoberfläche mit auf die Schnittlinie gelegtem Laserstrahl und lokaler Kühlung des Erwärmungsbereiches ausgeführt wird, und die zusätzliche Einwirkung auf die Werkstoffoberfläche durch nachfolgende Kühlung eines jeden Punktes der Schnittlinie im Erwärmungsbereich erfolgt, wobei das in einem Zeitraum geschieht, der der Erwärmungszeit dieses Punktes vergleichbar ist. Die Kühldauer wird je nach Stärke des Materials und nach seinen thermo-physikalischen Eigenschaften gewählt, um eine definierte Schnitttiefe zu erhalten.

## Beschreibung

Die Erfindung gehört zur Kategorie Schneideverfahren von spröden NE-Werkstoffen, insbesondere zu Laserschneideverfahren derartiger Werkstoffe, zum Beispiel: alle Glastypen, einschließlich Quarzglas, verschiedene Monokristalle, wie Saphir und Quarz, sämtliche Keramiktypen sowie Halbleitermaterial.

Wir kennen das Schneideverfahren von NE-Werkstoffen mit schnittlinienbezogenem Oberflächeneinschnitt, Erwärmung der Schnittlinie mit Laserstrahl bei relativer Bewegung von Laserstrahl und Werkstoff sowie lokaler Kühlung des Erwärmungsbereiches mit Kühlmittel (Patent RF Nr. 2024441, MKI⁵ C 03 B 33/02, Veröffentlichung 15.12.94).

Mit diesem Verfahren sind nicht nur Einschnitte, sondern auch durchgehendes Schneiden von Glas und anderer spröder NE-Werkstoffe durch Wiedererwärmung der Schnittlinie mit Laserstrahl oder einer anderen Wärmequelle möglich.

Der Nachteil des o.g. Schneideverfahrens ist seine geringe Schnittleistung, da auf Grund der niedrigen Wärmeleitfähigkeit des Glases die Vergrößerung der Einschnitttiefe nur bei langsamer Fördergeschwindigkeit, die zur besonders tiefen Durchwärmung des Materials beiträgt, möglich ist.

Wir kennen auch das Schneideverfahren von NE-Werkstoffen mit Laserstrahlerwärmung der Schnittlinie bei relativer Bewegung von Laserstrahl und Werkstoff, lokaler Kühlung des Erwärmungsbereiches mit Kühlmittel und nachfolgender Erwärmung der Werkstoffoberfläche längs der Schnittlinie mit zwei parallelen Laserstrahlen (s. Patent USA Nr. 6259058, MPK7 B 24 K 26/067, Veröffentlichung 10.07.2001). Analog zum o.g. Schneideverfahren kann das Wiedererwärmen auch hier eine Einschnitttiefe bis zum durchgehenden Schnitt im Werkstoff möglich machen. Doch diesem Verfahren haften die gleichen Nachteile wie dem Obigen an.

Wir kennen das Schneideverfahren von NE-Werkstoffen, das in Anlagen zur Laserstrahlbearbeitung von spröden Werkstoffen eingesetzt wird, und zwar mit Erwärmung der Werkstoffoberfläche mittels Laserstrahl, der einen Trennriss bewirkt, sowie mit zusätzlicher mechanischer Einwirkung auf die Werkstoffgegenseite (s. Patent RF Nr. 2139779, MKI B 23 K 26/00, Veröffentlichung 20.10.99).

Aber sowohl bei permanenter mechanischer Einwirkung auf die gegenüberliegende Materialseite, als auch im Zusammenspiel mit der Klopfarbeit auf der gegenüberliegende Materialseite einer beweglichen Kugel, die der Laufbahn des Laserstrahls folgt, erlauben diese Techniken den Nachlauf des Durchrisses bezüglich Laserstrahlposition auf der Materialoberfläche nur zu reduzieren, nicht aber die Schneidegeschwindigkeit zu erhöhen.

Des Weiteren kennt man das Schneideverfahren von spröden NE-Werkstoffen, das auf dem Einsatz oben gelisteter Techniken basiert, und zwar: Vorritzen (Fehler) der Schnittlinie mit Diamantwerkzeug, Erwärmung der Schnittlinie mit elliptischem Laserstrahl bei relativer Bewegung von Material und Laserstrahl sowie lokale Kühlung des Erwärmungsbereiches mit Kühlmittel (internationale Anmeldung PCT/RU94/00276, internationale Publikations-Nr. WO 97/20062, 1996). Diese Techniken können erfolgreich sowohl für geradlinige als auch für beliebige gekrümmte Schnitte eingesetzt werden.
Auch das Schneideverfahren von Glasscheiben ist bekannt, bei dem auf eine Oberflächenseite der Schnittlinie folgend ein gerichteter Wärmestrahl geleitet wird, was zur Trennrissbildung führt, auf der Gegenseite aber wird durch Biegekrafteinsatz die Rissbildung entlang der markierten Linie vorangetrieben (s. Patent USA Nr. 4190184, MKI C 03 B 33/02, Prior. 23.08.78).

Doch mit diesen Techniken ist kein hochleistungsfähiges und durchgehendes Schneiden möglich, denn für die entgültige Trennung eingeschnittener Werkstoffe werden zusätzliche mechanische oder sonstige Bearbeitungsgänge zur abschließenden Werkstoffspaltung benötigt. Mit diesen Bearbeitungsgängen sind auch keine hohen Schnittqualitäten möglich, und außerdem wird für den Spaltvorgang zusätzliche Ausrüstung gebraucht.

Technisch am nächsten der hier vorgeschlagenen Erfindung kommt das Glasschneideverfahren bei dem der Schnittlinieneinschnitt und die zusätzliche Einwirkung auf die Glasscheibenoberfläche mittels akustischer Schwingungen erfolgt, wobei die akustischen Schwingungen auch gleichzeitig die Glasscheibenoberfläche erregen (s. Schutzrecht UdSSR Nr. 996347, MKl⁵ CO3 B33/02, Veröffentlichung 15.02.83). Bei diesem Verfahren kommt es zum durchgehenden Schnitt, weil die Glasscheibe akustischen Schwingungen im Ultraschallbereich 2 bis 5 kHz ausgesetzt wird, dabei versetzen nach erfolgtem Einschnitt die akustischen Schwingungen parallel die Glasoberflächen in Erregung. Außerdem wird zur Steigerung der Prozesseffizienz die akustische Schwingungsfrequenz so gewählt, dass sie der Eigenschwingungsfrequenz gleich ist, um die Entstehung widerhallender Schwingungsfrequenzen zu fördern.

Aber diese Technik hat eine Reihe wesentlicher Nachteile, die ihrem breiten Einsatz in der Industrie im Wege stehen. Erstens, um die gesamte Glasscheibe mit Ultraschall in Schwingung zu versetzen, die zu ihrer Spaltung längs des mit der Schneide gemachten Einschnitts führen würde, wird ein immenser Energieaufwand benötigt. Zweitens ist dieses Schneideverfahren träge, da es aus einzelnen, zeitversetzten Arbeitsgängen besteht: Einschnitt anlegen, Vibratoraufstellung bezüglich der Einschnittlinie am genau vorgegebenem Ort und seine sichere Befestigung auf der Glasscheibenoberfläche für stabilen Kontakt, Schaltung eines magnetostriktiven oder piezoelektrischen Wandlers. Außerdem muss zur Gewinnung widerhallender Schwingungsfrequenzen die Schwingungsfrequenz geändert werden, denn nach jedem erfolgten Schnitt ändern sich die Maße des Ausgangswerkstücks. Dies erfordert aufwendige Vorberechnungen und ständige Korrekturen der Schwingungsfrequenz. Drittens führt der stabile Kontakt des Vibrators mit der Scheibenoberfläche zu Schäden an der Glasscheibenoberfläche, d.h. Kratzer und Ausbrüche sind die Folge. Dadurch steigt stark der Ausschussprozentanteil.

Der hier vorgestellten Erfindung wurde die Aufgabe zu Grunde gelegt, die Schneideleistung und Schneidequalität bei der Bearbeitung von spröden NE-Werkstoffen zu verbessern, und zwar durch die Möglichkeit durchgehende sowie nicht durchgehende Schnitte sowohl innerhalb eines als auch innerhalb verschiedener Arbeitsspiele bei gleicher Schnittgeschwindigkeit anzulegen sowie durch die Möglichkeit sich kreuzende Schnitte zu ziehen und die Möglichkeit aus zwei Schichten bestehende Werkstoffpakete schneiden zu können.

Für die gestellte Aufgabe wurden zwei Lösungsvarianten gefunden.

Bei der ersten Variante basiert die Aufgabenlösung darauf, dass das Schneideverfahren von spröden NE-Werkstoffen mit Schnittlinieneinschnitt sowie zusätzlicher Einwirkung auf die Werkstoffoberfläche sich dadurch auszeichnet, dass die zusätzliche Einwirkung auf die Werkstoffoberfläche im Einschnittbereich mit mindestens einer Quelle elastischer Wellen erfolgt, wobei die Wellenamplitude und - frequenz mit der Vorgabe gewählt werden, den Einschnitt um das Sollmaß zu vertiefen oder einen durchgehenden Schnitt auszuführen. Der Schnittlinieneinschnitt erfolgt zum Bespiel mit Schneideeisen, Laserstrahl, durch Erwärmung der Werkstoffoberfläche an der Schnittlinie mit Laserstrahl und Nachkühlung des angewärmten Bereiches, wobei elastische Wellen auf den Zufuhrbereich des Kühlmittels einwirken. Der Schnittlinieneinschnitt kann durch Schnittlinienerwärmung mit zwei Laserstrahlen erfolgen, die auf der Werkstoffoberfläche mit Sollabstand zueinander und im rechten Winkel hinsichtlich Laserstrahl- und Werkstoffbewegungsrichtung positioniert sind. Bei Anwendung dieses Verfahrens werden überwiegend elastische Wellen im Werkstoffvolumen innerhalb des Schnittlinieneinschnitts konzentriert. Zweckmäßigerweise sollten als Quelle der elastischen Wellen Impulslaserstrahlen eingesetzt werden, für die der Werkstoff nicht transparent ist.

Als Schneide werden Diamantpyramiden mit Schnittkante 70 bis 140 Winkelgrade oder eine rotierende Hartmetallrolle mit Schliffwinkel 70 bis 140 Winkelgrade eingesetzt.

Die Beanspruchung der Schnittlinie mit elastischen Wellen erfolgt zum Beispiel nach erfolgtem Einschnitt oder nur in vorgegebenen zur Schnittlinie gehörenden Werkstoffbereichen. Um Schrägschnitte zur erhalten, sieht das Verfahren vor, dass die Wirklinie der elastischen Wellen und die Einschnittlinie gegeneinander in der zur Werkstoffoberfläche rechtwinkligen Ebene versetzt sind.

In einigen Fällen werden gleichzeitig zwei elastische Wellen auf der Einschnittseite dem Einschnittwerkzeug folgend und zu beiden Seiten der Einschnittlinie konzentriert oder man konzentriert die elastische Welle gleichzeitig im Werkstoffvolumen des Einschnittbereiches, indem auf die Werkstoffgegenseite eingewirkt wird, und zwar im Bereich zwischen den Wirkbereichen von zwei weiteren elastischen Wellen, die auf der Einschnittseite konzentriert werden.

Bei der zweiten Variante basiert die Aufgabenlösung darauf, dass das Schneideverfahren spröder NE-Werkstoffe mit Schnittlinieneinschnitt und zusätzlicher Einwirkung auf die Werkstoffoberfläche sich dadurch auszeichnet, dass der Einschnitt durch Erwärmung der Werkstoffoberfläche mit auf die Schnittlinie gelegtem Laserstrahl und lokaler Kühlung des Erwärmungsbereiches erfolgt, und die zusätzliche Einwirkung auf die Werkstoffoberfläche durch nachfolgende Kühlung eines jeden Punktes der Schnittlinie im Erwärmungsbereich ausgeführt wird, wobei das in einem Zeitraum geschieht, der der Erwärmungszeit dieses Punktes vergleichbar ist. Die Kühldauer wird je nach Stärke des Materials und nach seinen thermo-physikalischen Eigenschaften gewählt, um eine definierte Schnitttiefe zu erhalten.

Die Grundidee der Erfindung wird mit folgenden Zeichnungen erläutert:
- Bild 1:: Einschnitt mit Laserstrahl
- Bild 2:: Einschnitt mit Laserstrahl und Kühlmittel
- Bild 3:: Einschnitt mit zwei Laserstrahlen
- Bild 4:: Vertiefen mit elastischer Welle bis auf Sollmaß des mit Schneideisen ausgeführten Einschnitts
- Bild 5:: Einschnittvertiefung mit elastischer Welle bis Durchgang
- Bild 6:: Durchgehender und nicht durchgehender Einschnitt sowie zwei sich kreuzende durchgehende Einschnitte in einem Arbeitsspiel
- Bild 7:: Schrägschnitt bezogen auf Werkstoffoberfläche
- Bild 8:: Bearbeitung mit durchgehendem Schnitt von zwei verklebten Tafeln
- Bild 9:: Durchgehender Schnitt bei Verwendung eines mechanischen Wellenleiters und Wellenkonzentrators, die auf der Gegenseite der Tafel liegen
- Bild 10:: Durchgehender Schnitt mit zwei Laserstrahlen und zwei Wellenkonzentratoren (Draufsicht)
- Bild 11:: Durchgehender Schnitt mit zwei Laserstrahlen und zwei Wellenkonzentratoren (Frontansicht)
- Bild 12:: Durchgehender Schnitt mit drei elastischen Wellen (Schnittzeichnung)
- Bild 13:: Wellenkonzentrator mit Angriff von der Einschnittseite
- Bild 14:: Durchgehender Schnitt durch Einwirkung lang gestreckten Kühlmittels
- Bild 15:: Gesteuerter Schnitt bis auf Sollmaß mit mehrstufiger gesteuerter Kühlung

Das Schneideverfahren von NE-Werkstoffen Variante 1 sieht wie folgt aus:

Bei der Bearbeitung von Glasoberflächen oder von Oberflächen anderer spröder Werkstoffe 1 wird mit Werkzeug 2 - bei relativer Bewegung beider mit Geschwindigkeit υ - im Werkstoffvolumen ein Einschnitt 3 mit Tiefenmaß δ gemacht.

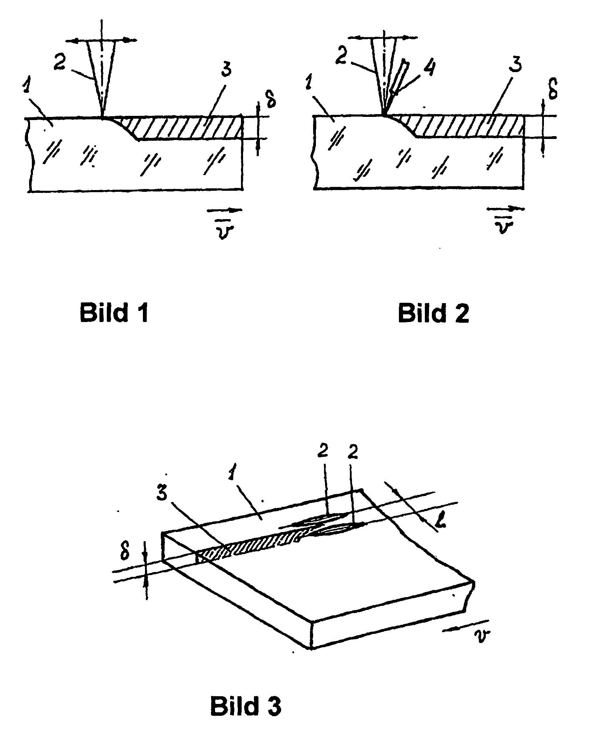

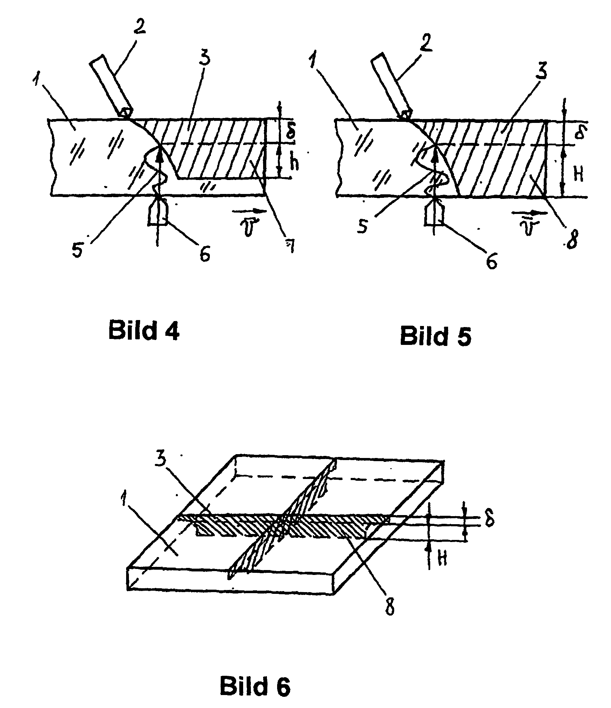

Als Werkzeug 2 kann entsprechend der Erfindung folgendes eingesetzt werden: Laserstrahl (Bild 1), Schneide (Bild 4), zwei Laserstrahlen, die auf der Werkstoffoberfläche mit Sollabstand zueinander und im rechten Winkel zur Laserstrahl- und Werkstoffbewegung positioniert sind (Bild 3), und sonstige vergleichbare Werkzeuge. Der Einschnitt kann zum Beispiel durch Erwärmung mit Laserstrahl 2 und lokaler Kühlung mit Kühlmittel 4 (Bild 2) im Wärmbereich erfolgen.

Das Hauptmerkmal der ersten Variante ist, die Fähigkeit eine elastische Welle 5, die von der Quelle 6 geliefert wird, im Werkstoffvolumen 1 und Einschnittbereich 3 zu konzentrieren, wobei als Quelle ein Konzentrator oder ein Abstrahlimpulslaser, für den der Werkstoff nicht transparent ist, eingesetzt werden kann.

An dieser Stelle soll unterstrichen werden, dass bei diesem Verfahren praktisch keine sichtbaren mechanischen Einflüsse auf die Werkstoffoberfläche sowie Werkstoffvibrationen zu beobachten sind. Je nach Einflussbedingungen der elastischen Welle (Amplitude und Schwingungsfrequenz), die in Verbindung zu den wesentlichen Schnittparametern: Geschwindigkeit und Einschnitttiefe δ stehen, kann hierbei der Schnitt 7 problemlos auf die Solltiefe h gebracht werden. Indem die Prozessparameter geändert werden, kann problemlos ein durchgehender Schnitt 8 mit Tiefenmaß H gemacht werden.

Schauen wir uns nun die physikalischen Prinzipien bei Generierung und Ausbreitung der elastischen Welle im festelastischen Körper an sowie die Bedingungen bei Vergrößerung der Einschnitttiefe bis hin zum durchgehenden Schnitt durch Eingriff der elastischen Welle im Einschnittbereich.

Wenn sich die elastische Welle im Festkörper ausbreitet, kommt es zu mechanischen Druck(Zug-)- und Scherverformungen, die von der elastischen Wellen von einem Punkt des Werkstoffs zum anderen übertragen werden. Dabei kommt es zur Verlagerung der Verformungsenergie im Festkörpervolumen. In isotropen Festkörpern können sich zwei Typen elastischer Wellen ausbreiten: Longitudinal- und Scherungswellen. Longitudinalwellen bewirken Verformungen, die eine Kombination aus Druck (Zug) und reiner Scherung sind. In Scherwellen ist die Verformung reine Scherung. Die elastische Welle kennzeichnet sich durch Amplitude und Schwingungsrichtung, Wellenlänge, Phasen- und Gruppengeschwindigkeit sowie durch das Gesetz der Versatz- und Spannungsverteilung über die Wellenfront. Diese Parameter sollten zur Bestimmung optimaler Bedingungen für die Einschnittvertiefung berücksichtigt werden, und zwar der Wellenkonzentration im Werkstoffvolumen des Einschnittbereiches.

Für die Wellenübertragung von der Quelle zum Einschnittbereich können akustische Wellenleiter verwendet werden. Zum Beispiel in einer Lamelle oder einem Stab, die feste akustische Wellenleiter darstellen, können sich Wellen ausbreiten, die eine Kombination aus Longitudinal- und Scherungswellen sind und sich im spitzen Winkel zur Wellenleiterachse ausbreiten sowie Grenzbedingungen genügen: Keine mechanischen Spannungen auf der Wellenleiteroberfläche. Der Wellenleiter kann mit einem Konzentrator abschließen, der die elastische Welle in einem definierten Bereich des Werkstoffvolumens konzentriert.

Ein großer Vorteil der Erfindung ist, der Umstand, dass die elastische Welle gezielt in Sollbereichen der Einschnittlinie angreifen kann, wodurch während eines Arbeitsspiels abwechselnd Einschnitt und durchgehender Schnitt erfolgen können. Ein Beispiel für diese Schnittart zeigt das Bild 6. Hier wird während eines Arbeitsspiels der Schnittvorgang mit einem nicht durchgehenden Einschnitt 3 begonnen und abgeschlossen, d.h. ohne Tiefenwirkung der elastischen Welle, und der Restschnitt erfolgt dann mit Durchriss 8. Erstens sind mit dieser Technik durchgehende sich kreuzende Schnitte ohne Qualitätsverlust in den Kreuzungspunkten der Schnitte und ohne zusätzliche Einkerbungen in den Kreuzungspunkten möglich. Zweitens werden hierdurch Schnittpräzision und Schnittqualität sichergestellt, denn bis zur endgültigen Zerteilung der Tafel in einzelne Elemente, behält sie ihre ursprünglichen Maße und Ganzheit bei.

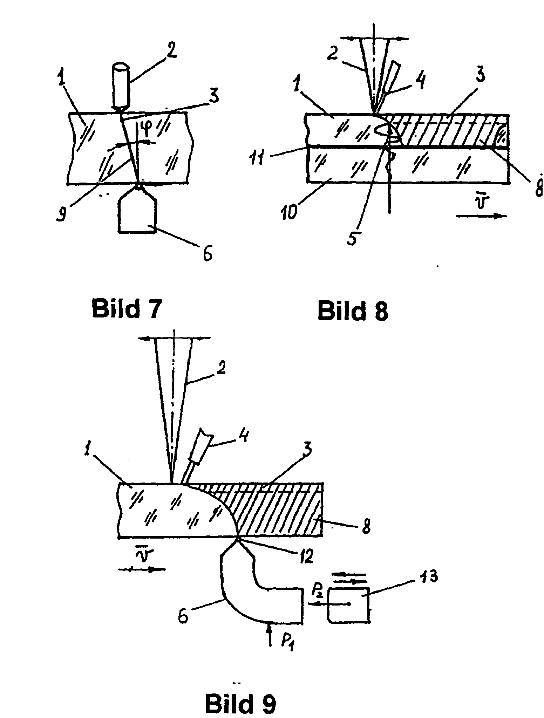

Ein weiterer Vorzug des hier vorgeschlagenen Schneideverfahrens von NE-Werkstoffen ist, dass durchgehende Schnitte in einem bestimmten Winkel zur Ebene, die rechtwinklig zur Werkstoffoberfläche ist, möglich sind. Dies kann gewährleistet werden, weil die Einwirkungslinie der Wellenquelle 6 und die Einwirkungslinie der Werkzeugschneide 2 versetzt zu der Ebene verlaufen, die rechtwinklig zur Werkstoffoberfläche 1 (Bild 7) ist. Infolge dieses Versatzes verläuft die Linie des durchgehenden Schnitts 9 mit Neigungswinkel ϕ im rechten Winkel zur Werkstoffoberfläche. Mit dieser Technik werden besonders gute Ergebnisse beim Schneiden runder Scheiben und sonstiger kreisförmiger Teile erzielt, weil die Fertigteile besonders leicht aus dem Werkstück gelöst werden können. Dabei kann die Neigung so gering sein, dass die Schnittgenauigkeit von ihr praktisch nicht beeinflusst wird.

Mit dem hier vorgestellten Schneideverfahren von NE-Werkstoffen können nicht nur einschichtige, sondern auch verklebte Tafeln bearbeitet werden. Das Bild 8 zeigt den Schnittplan der Tafel 1, die mittels Klebeverbindung 11 mit der Tafel 10 verbunden ist. In diesem Fall breitet sich die elastische Welle 5 von der Seite der Tafel 10 kommend aus und vertieft den Einschnitt, nach Erreichen des Einschnittbereiches 3, bis zum durchgehenden Schnitt 8 der Tafel 1.

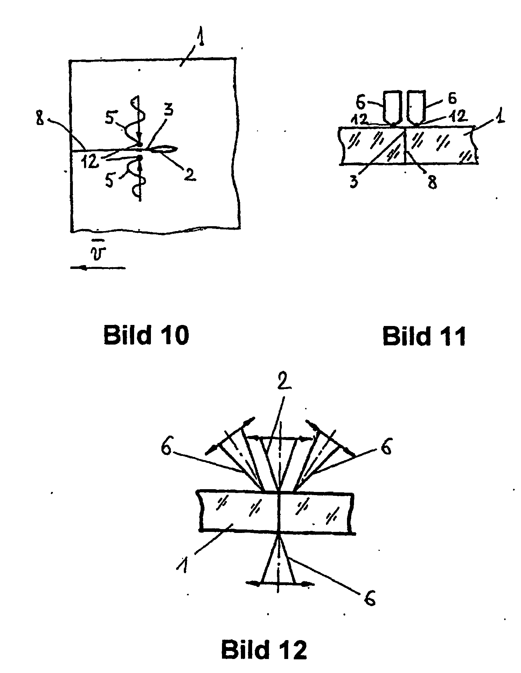

Es gibt eine Reihe von Fällen, da können Wellenleiter und Wellenkonzentrator auf der gegenüberliegenden Werkstoffoberfläche nur mit Mühe oder gar nicht aufgestellt werden. Aber es besteht auch die Möglichkeit, die elastischen Wellen von der Seite des Einschnitts 3 der Tafel 1 (Bild 10 + 11) in das Werkstoffvolumen zu leiten. Alles hängt von der Bauart und dem Typ der verwendeten Wellenquelle ab. Im gegeben Fall werden gleichzeitig mit zwei Wellenleitern 6 und zwei Konzentratoren 12 zwei elastische Wellen konzentriert, und zwar auf der Wirkbereichseite des Werkzeugs 2 zu beiden Seiten der Einschnittlinie 3. Bei zusätzlicher Einwirkung von zwei Wellenkonzentratoren zu beiden Seiten der Einschnittlinie kommt es zu zusätzlichen Zugbeanspruchungen durch Raumspannungen, die eine Vertiefung des Einschnitts oder einen durchgehenden Schnitt 8 bewirken.

Betrachten wir die einfachste Art das vorgeschlagene Verfahren zu implementieren, und zwar: Vertiefen des Einschnitts 3 oder Ausführung eines durchgehenden Schnitts mit mechanischem Wellenleiter 6 und Konzentrator 12 für elastische Welle, die durch Einwirkung des Schlagstücks 13 (Bild 9) entsteht. Die Ausführung des mechanischen Wellenleiters 6 kann sowohl eine geradlinige als auch eine gekrümmte sein (s. Bild 9). Mit dieser Wellenleiterausführung wird eine direkte Übertragung des mit dem Schlagstück 13 geführten Stoßes auf die Werkstoffoberfläche 1 vermieden. Im geschilderten Fall ist der Wellenleiter 6 als gekrümmter Metallstift ausgebildet, der mit einem Konzentrator 12 abschließt - ein Konus mit definiertem Endpunktwinkel, wobei der Konusendpunkt Halbkreisform besitzt, die ihm mit einer eingepressten Stahlkugel verliehen werden kann. Damit erhält man Punktkontakt zwischen dem Konzentrator 12 und der Werkstoffoberfläche 1. Der Konzentrator wird im rechten Winkel zur Werkstoffoberfläche aufgestellt und befindet sich genau unterhalb der Einschnittlinie 3 im Einschnittentstehungsbereich. Dabei darf die permanente mechanische Einwirkung des Konzentrators auf die Werkstoffoberfläche 1 mit Kraft P₁ nur minimal sein, und darf keine Werkstoffverformungen hervorrufen, sondern nur den Kontakt zwischen Konzentrator und Werkstoffoberfläche 1 sicherstellen. Die elastische Welle wird im Wellenleiter 6 und im Konzentrator durch das Zusammenwirken von Schlagstück 13 und Wellenleiterspitze 6 mit Kraft P₁ generiert. Beim Schlag gegen den Wellenleiter 6 entsteht in ihm eine elastische Verformungswelle, die sich im Wellenleiter 6 ausbreitet und im Konzentrator gespeichert wird. Im Kontaktpunkt zwischen Konzentrator und Werkstoffoberfläche 1 wird die Energie der elastischen Verformung in das Werkstoffvolumen 1 übertragen und Querwellen bewirken - nach Erreichen der Einschnittspitze 3 - die Ausbildung des Einschnitts 3 in das Werkstoffinnere, bis hin zum durchgehenden Schnitt 8.

In einigen Fällen scheint kombiniertes Einwirken von Quellen elastischer Wellen gleichzeitig von zwei Seiten auf das zu trennende Material 1 (Bild 12) effizient zu sein. Dieser Bearbeitungsfall ist für das durchgehende Schneiden von Werkstofftafeln großer Stärke besonders wirkungsvoll.

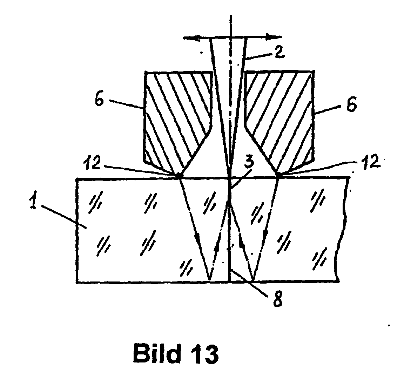

Das Bild 13 zeigt eine Ausführungsvariante für Wellenleiter 6 mit Konzentrator 12, um auf den Werkstoff 1 von der Seite des Einschnitts 3 einzuwirken.

Der Frequenzbereich elastischer Wellen, mit denen der Einschnitt tiefer ausgebildet wird, kann sehr groß sein: einige Hz bis zu Hochfrequenzschwingungen. Als Quelle der elastischen Welle können die unterschiedlichsten Varianten eingesetzt werden. Dabei kann die Wellenquelle sowohl auf der Einschnittseite als auch auf der gegenüberliegenden Oberfläche positioniert werden, je nach verwendetem Quellentyp und konstruktiven Besonderheiten der eingesetzten Ausrüstung.

Das Schneideverfahren von NE-Werkstoffen Variante 2 sieht wie folgt aus:

Beim Einsatz gängiger Schneideverfahren entstehen bei Erwärmung von NE-Werkstoffen, zum Beispiel Glasscheiben 1, mit einem elliptischen Laserstrahl 2, hohe Druckspannungen σ_{D}, deren Werte aber für die Werkstoffzerstörung unzureichend sind. Das hängt damit zusammen, dass die Druckfestigkeit des Werkstoffs um einiges höher ist als seine Bruch- oder Biegefestigkeit. Zum Beispiel die Druckfestigkeit des Glases ist um das 8 bis 10fache höher als seine Bruchfestigkeit. Die Druckspannungen steigen mit der fortschreitenden Bewegung des Laserstrahls entlang der Schnittlinie und erreichen ihren Spitzenwert nach vollem Durchlauf des Laserstrahls. Bei schnellem lokalen Runterkühlen des Erwärmungsbereiches mit Punktkühlmittel 4, zum Beispiel Luft-Wasserstrahl, das über eine Düse zugeführt wird, ändern die Druckspannungen σ_{D} in den oberen Werkstoffschichten 1 ihren Wert in den Gegenwert um. Unter dem Einfluss entstehender Zugspannungen σ_{Z} entsteht im Werkstoff ein Haarriss 3, der sich der Grenze "Erwärmung - Abkühlung" folgend nach Maßgabe relativer Laserstrahl- und Kühlmittelbewegung mit Geschwindigkeit υ ausbreitet. Mit dem lokalen Punktkühlmittel kann die Wärme nur von der dünnen Oberflächenschicht abgeleitet werden. Deshalb wird die weitere Ausbreitung des Haarrisses 3 in das Werkstoffvolumen durch volumetrische Druckspannungen σ_{D}, die im inneren des erwärmten Werkstoffs gespeichert bleiben, verhindert.

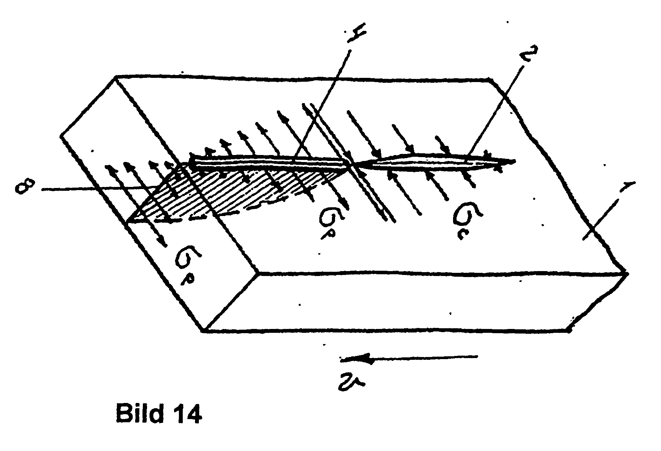

Ein vollkommen anderes Bild entsteht beim Kühlen des erwärmten Bereiches mit lang gestrecktem Spaltkühlmittel (Bild 14). Genau wie bei dem Fall vorher, kommt es zu den höchsten Druckspannungen in den oberen Werkstoffschichten. Wird Kühlmittel zugeführt, entsteht in der Anfangsphase unter dem Einfluss gewaltiger Oberflächenzugspannungen σ_{Z} ein nicht besonders tiefer Haarriss. Bei Fortsetzung der Kühlmittelzufuhr in den Erwärmungsbereich sinkt der Wert der Oberflächenzugspannungen, aber die volumetrischen Zugspannungen nehmen zu und bewirken, dass sich der Haarriss in die Tiefe bis hin zum Durchriss 8 ausbreitet.

Als Kühlmittel können eingesetzt werden: Luftstrahl, spezielles Gasgemisch, Luft-Gas-Gemisch, Gemisch aus Gas und Flüssigmittel, zum Beispiel Luft-Wasser-Gemisch oder unterschiedliche Kühlvorrichtungen. Dabei werden die Komponentenmenge im zugeführten Gemisch und die Gemischzufuhrleistung in den Erwärmungsbereich in Abhängigkeit von der Werkstoffstärke und von seinen Eigenschaften, sowie von den technischen Forderungen und den Einschränkungen, mit denen der Scheidevorgang belegt ist, geregelt und gesteuert. Zum Beispiel ist in einigen Fällen das Wasser als Kühlmittel nicht zulässig, weil es den zu trennenden Werkstoff oder spezielle Beschichtungen und Strukturen auf der Werkstoffoberfläche verschmutzen kann.

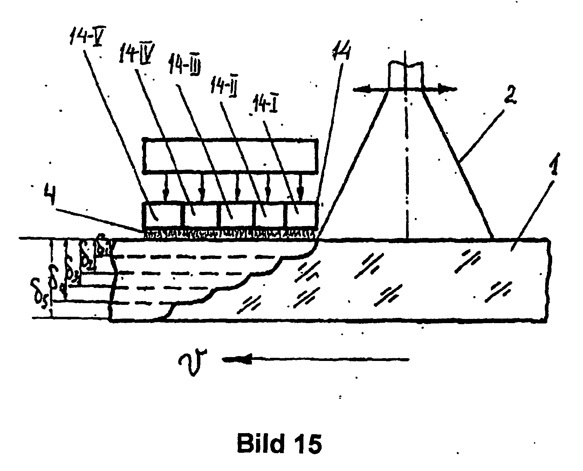

Um die Ausbreitungstiefe des Risses steuern zu können, sollte die Kühlmittelzuführung zweckmäßigerweise mehrstufig sein, mit der Möglichkeit während des Schneidevorgangs die einzelnen Stufen ansteuern zu können. Die gleiche Technik sollte zweckmäßigerweise auch beim Schneiden von Werkstoffen mit unterschiedlicher Stärke oder von Werkstoffen mit unterschiedlichen Eigenschaften eingesetzt werden. D.h. die Zahl aktiver Stufen der Kühlmittelzuführung, zum Beispiel einer mehrstufigen Spaltdüse, wird in Abhängigkeit von der Materialstärke und seiner Wärmeleitfähigkeit bestimmt. Das Bild 15 zeigt einen gesteuerten Schnitt auf Solltiefe mit mehrstufiger gesteuerter Kühlung. Auf die Werkstoffoberfläche 1 wird ein Laserstrahl 2 gerichtet, der mit Optik-Mitteln hinsichtlich Bewegungsrichtung gestreckt generiert wird. Hinter dem Laserstrahl ist die mehrstufige Spaltdüse 14 positioniert, die Kühlmittel 4 in den Erwärmungsbereich liefert, und im gegebenen Fall aus fünf unabhängigen Stufen 14-I, 14-II, 14-III, 14-IV, 14-V besteht, die PCgesteuert sind. Ist nur die erste Düsenstufe 14-I aktiv, entsteht im Werkstoff ein Riss mit Tiefenmaß δ₁. Sind zwei Düsenstufen 14-I und 14-II aktiv, dann breitet sich im Material ein Riss mit Tiefenmaß δ₂ aus. Sind zwei Düsenstufen 14-I, 14-II und 14-III aktiv, vergrößert sich der Tiefenriss bis zum Wert δ₃. Indem man die Kühlstufenzahl bis zum erforderlichen Wert erhöht, zum Beispiel bis fünf Stufen, ist ein Durchriss mit Tiefenmaß δ₅ möglich.

Nachfolgend werden Anwendungsbeispiele nach Variante 1 der Erfindung vorgestellt.

Beispiel 1: Als Trennmaterial wurden 0,7 mm starke Glasscheiben verwendet. Die Einschnittausführung erfolgte mit Reißblatt, bei dem eine Diamantpyramide mit Spanflächenwinkel 120 Winkelgrad das Schnittwerkzeug bildete. Als Fördermittel für die Glasscheibe kam ein Zweiachsentisch mit Hub 500x400 und Fördergeschwindigkeit 500 mm/s zum Einsatz. Auf die Gegenseite der Glasscheibe wurde mit einer Quelle für elastische Wellen eingewirkt. Zu diesem Zweck wurde mit Kontakt zur Werkstoffoberfläche und gegenüber dem Laserstrahlwirkbereich ein Konzentrator mechanischer Wellen aufgestellt, der die Form eines konisch zulaufenden Rundstifts mit ⌀ 5 mm hatte und mit Spitze in Halbkreisform ⌀ 1,5 mm versehen war. Der Konzentratoranpressdruck am Quarzglas betrug P₁ = 2 ... 4 G und war für permanenten Kontakt zwischen Konzentrator und Werkstoff während des Schneidevorgangs gedacht, d.h. der Konzentrator sollte die Materialoberfläche auf Mikrolunker prüfen. Die Einwirkung auf die Welleleiterspitze erfolgte mittels Schlagstück mit der Kraft P₂ = 45 G und Frequenz 200 Hz, wodurch das Generieren einer elastischen Verformungswelle im Konzentrator möglich war. Während der Fahrt der Glasscheibe mit Geschwindigkeit 350 mm/s wurde mit der Diamantpyramide eine 0,07 mm tiefe Riefe gezogen, wobei durch das Einwirken der elastischen Welle im Einschnittbereich das Vertiefen des Einschnitts bis zum durchgehenden Schnitt möglich war. Durch das Einwirken mit dem Schlagstück auf die Wellenleiterspitze mit Kraft 25 G und Frequenz 250 Hz war es möglich, den Einschnitt bis auf 0,5 mm bei einer Geschwindigkeit von 350 mm/s zu vertiefen.

Beispiel 2: Geschnitten wurden Glasscheiben mit Stärke 1,1 mm und zwar in Scheiben mit 65 mm Außendurchmesser und 20 mm Innendurchmesser. Als Werkzeug für den Einschnitt nach Vorgabeumriss wurde eine Hartmetallrolle mit ⌀ 7 mm und Schliffwinkel 95° verwendet. Als Wellenquelle setzte man eine Vorrichtung wie in Beispiel 1 ein. Dabei waren die Hartmetallrolle und der Konzentrator gegeneinander in der zum Werkstoff im rechten Winkel stehenden Ebene um 0,025 mm hin zur größeren Toleranz des geometrischen Sollmaßes versetzt. Dies ermöglichte das Ausführen eines durchgehenden Schrägschnitts, womit wiederum sichergestellt werden konnte, dass die Scheibenaußen- und Innenseiteseite ohne Materialschäden im Hauptarbeitsbereich der Scheibe entgratet werden konnten.

Beispiel 3: Geschnitten wurde Quarzglas mit Scheibenstärke 2,2 mm. Als Werkzeug für den Einschnitt nach Vorgabeumriss wurde eine Hartmetallrolle mit Schliffwinkel 115° verwendet. Um die Einschnitttiefe 0,15 mm zu vergrößern, wurde von der Seite der Einschnittausführung und der Rolle folgend gleichzeitig mit zwei Konzentratoren, die von einander im Abstand von 3 mm zu beiden Seiten der Schnittlinie aufgestellt waren, eingewirkt. Unter Verwendung des Schlagstücks wurde auf die Wellenleiterspitzen mit der Kraft 80 G und Frequenz 150 Hz geschlagen. Der Schnitt mit durchgehender Nachspaltung erfolgte bei einer Geschwindigkeit von 300 mm/s.

In allen drei Beispielen wurden Quellen und Konzentratoren reversibler Verformungswellen eingesetzt, die durch mechanische Einwirkung des Schlagstücks auf die Wellenleiterspitze entstehen. Dabei übte der Konzentrator, wie bereits unterstrichen wurde, keinen mechanischen Einfluss auf die Werkstoffoberfläche aus. Zugleich wurden mehrere Reihen weiterer Wellenquellen getestet und positive Ergebnisse gesammelt.

Beispiel 4: Geschnitten wurde Quarzglas mit Scheibenstärke 0,8 mm. Mit dem Ziel Schnittversuche durchzuführen, wurde eine Anlage mit Mulitmoden-CO₂-Laser mit 85 KW Leistung und mit Zweiachsentisch mit Hub 550x650 mm und Fördergeschwindigkeit 750 mm/s eingesetzt. Der Laserstrahl wurde auf die Werkstoffoberflache mit einer sphero-zylindrischen Optik aus Zinkselenid fokussiert, mit der eine Laserstrahlintensität auf der Quarzoberfläche von 20 W/mm² möglich war. Mit einer Quelle für elastische Welle wurde auf die Gegenseite der Quarzscheibe eingewirkt. Zu diesem Zweck wurde mit Kontakt zur Werkstoffoberfläche gegenüber dem Laserstrahlwirkbereich ein Konzentrator mechanischer Wellen aufgestellt, der die Form eines konisch zulaufenden Rundstifts mit ⌀ 5 mm hatte und mit Spitze in Halbkreisform ⌀ 1,5 mm versehen war. Der Konzentratoranpressdruck am Quarzglas betrug P₁ = 2 ... 4 G und war für permanenten Kontakt zwischen Konzentrator und Werkstoff während des Schneidevorgangs gedacht, d.h. der Konzentrator sollte die Materialoberfläche auf Mikrolunker prüfen. Die Einwirkung auf die Welleleiterspitze erfolgte mittels Schlagstück mit der Kraft P₂ = 40 G und Frequenz 300 Hz, wodurch das Generieren einer reversiblen Verformungswelle im Konzentrator möglich war. Während der Fahrt der Quarzglasscheibe mit 350 mm/s wurde mit der Diamantpyramide eine 0,09 mm tiefe Riefe gezogen, wobei durch das Einwirken der elastischen Welle im Einschnittbereich das Vertiefen des Einschnitts bis zum durchgehenden Schnitt möglich war. Dabei erfolgten Schnitt und Nachspaltung gleichzeitig bei einer Geschwindigkeit von 350 mm/s.

Durchaus interessant scheint das Generieren elastischer Wellen für das Vertiefen des Werkstoffeinschnitts durch Erwärmung der Oberfläche oder des Werkstoffvolumens mit Hilfe von Impulslaserstrahlung zu sein. Obwohl dadurch die eingesetzte Ausrüstung etwas teuerer wird, scheint dieser Schritt in einigen Fällen gerechtfertigt zu sein. Die Ergebnisse dieser Technik werden im Beispiel 5 vorgestellt.

Beispiel 5: Als Trennmaterial wurden 0,7 mm starke Glasscheiben verwendet. Mit dem Ziel Schnittversuche durchzuführen, wurde eine Anlage bestehend aus einem Mulitmoden-CO₂-Laser mit 100 W Leistung, der für den Einschnitt in der Werkstoffoberfläche vorgesehen war, und einem zweiten Impuls-CO₂-Laser mit 85 W Leistung und mit regelbarer Laserstrahlfrequenz bis 40 MHz für das Generieren einer elastischen Welle im Werkstoff eingesetzt. Die Glasscheibe wurde auf einem Zweiachsentisch mit Hub 670x720 mm und Fördergeschwindigkeit 750 mm/s bewegt. Der Strahl des ersten Lasers wurde auf die Werkstoffoberfläche mit einer sphero-zylindrischen Optik aus Zinkselenid fokussiert, mit deren Hilfe elliptische 45 mm lange Strahlen generiert werden können. Während der Fahrt der Glasscheibe mit 350 mm/s wurde im Glas mit Laserstrahl und Kühlmittel ein 0,12 mm tiefer Einschnitt gemacht. Der Strahl des Impulslasers wurde mittels Optik zu zwei Bündeln mit ⌀ 1 mm und zu beiden Seiten des Einschnitts im Abstand von 1,5 mm voneinander gelegen, generiert. Die Einwirkung der elastischen Welle im Einschnittbereich mit 100 Hz bedingte das Vertiefen des Einschnitts bis zum durchgehenden Schnitt. Dabei erfolgen Schnitt und Nachspaltung gleichzeitig mit Geschwindigkeit 350 mm/s.

Dadurch, dass die Einwirkung der elastischen Welle auf ein sehr beschränktes und begrenztes Werkstoffvolumen im Bereich des Lasereinschnitts konzentriert ist, ist es möglich, benachbarte Schnitte unmittelbar nebeneinander zu legen. Es können vierund rechteckige Werkstücke geschnitten werden, deren Mindestabmessung nicht größer sein kann, als die Stärke des Ausgangmaterials. So konnten zum Beispiel viereckige Werkstücke mit der Stärke 1,1 mm und den Abmessungen 1,1 x1,1 mm ausgeschnitten werden, oder Werkstücke mit den Abmessungen 2,5x2,5 mm aus Glas mit 3 mm Stärke.

Nachfolgend werden Anwendungsbeispiele nach Variante 2 der Erfindung vorgestellt.

Beispiel 6: Geschnitten wurde Borosilikatglas mit Stärke 0,7 mm unter Verwendung eines CO₂-Lasers mit spezieller Modalstruktur und Wellelänge 10,6 mm sowie 95 W Leistung. Der Laserstrahl wurde auf die Oberfläche mit einem sphero-zylindrischen Objektiv aus ZnSe fokussiert, mit dem ein 45 mm langer elliptischer Strahl im Schnittbereich generiert werden kann. Schnittfolge: Die Glasscheibe wurde mittels Vakuum auf dem Positioniertisch fixiert. Danach wurde die Fahrt des Positioniertisches mit Sollgeschwindigkeit eingeleitet. Anschließend hat man den Laserstrahl auf die Oberfläche der in Bewegung befindlichen Scheibe gerichtet, um dann dem Laserstrahl hinterher aus Luft-Gasgemisch bestehendes Kühlmittel mittels fünfstufiger Spaltdüse zu zuführen. Jede Stufe der Spaltdüse hat einen 9 mm langen Schlitz, der auf die Schnittlinie ausgerichtet ist. Die Glasscheibe wurde unter den Unterschiedlichsten Kühlbedingungen geschnitten:
1. Kühlung mittels klassischer Einfachdüse
2. Kühlung mit einer Spaltstufe der fünfstufigen Düse
3. Kühlung mit zwei Spaltstufen der fünfstufigen Düse
4. Kühlung mit drei Spaltstufen der fünfstufigen Düse
5. Kühlung mit vier Spaltstufen der fünfstufigen Düse
6. Kühlung mit fünf Spaltstufen der fünfstufigen Düse

Für jeden Bearbeitungsfall wurden die max. Geschwindigkeit für durchgehendes Schneiden und die max. Geschwindigkeit für Schnitte mit Haarriss festgelegt. Die Testergebnisse können der Tabelle 1 entnommen werden. Symbolerklärung der Tabelle:
- M - nicht durchgehender Schnitt mit Haarriss
- C - durchgehender Schnitt
- "-" - ohne Schnitt

**Tabelle 1**

| Beispiele | | Schnittgeschwindigkeit mm/s | | | | | | |
|---|---|---|---|---|---|---|---|---|
| Lfd. Nr. | Düsenart | 250 | 300 | 350 | 400 | 450 | 500 | 550 |
| 1 | Einfachdüse | M | M | - | - | - | - | - |
| 2 | 1stufige Spaltdüse | C | C | M | M | - | - | - |
| 3 | 2stufige Spaltdüse | C | C | C | M | M | - | - |
| 4 | 3stufige Spaltdüse | C | C | C | C | M | M | - |
| 5 | 4stufige Spaltdüse | C | C | C | C | C | M | - |
| 6 | 5stufige Spaltdüse | C | C | C | C | C | C | M |

Beispiel 7: Für die Schneidbearbeitung wurde als Material eine Saphirauflage mit ⌀ 50,8 mm und 0,43 mm Stärke gewählt. Zum Schneiden benutzte man einen Multimodal-CO₂-Laser mit spezieller Modalstruktur und 75 W Leistung. Mit einem Doppellinsenobjektiv wurde der Laserstrahl auf der Auflage als 7 mm langes Strahlenbündel mit Streckung in Richtung Schnitt generiert. Als Kühlmittel verwendete man einen komprimierten gewässerten Gasstrahl, der mittels 9 mm langer Spaltdüse zugeführt wurde. Bei einer Fördergeschwindigkeit von 350 bis 700 mm/s wurde die Saphirauflage durchgehend geschnitten. Bei weiterer Erhöhung der Geschwindigkeit erfolgte das Schneiden durch Ziehen des Einschnitts mit Tiefenmaß, das sich bei steigender Fördergeschwindigkeit der Auflage hinsichtlich Laserstrahlund Kühlmittel reduzierte. Die max. Geschwindigkeit für nicht durchgehendes Schneiden betrug 1100 mm/s.

Die hier vorgestellte Erfindung kann auf verschiedenen technischen Gebieten für präzises und leistungsfähiges Schneiden der unterschiedlichsten Werkstoffe sowohl über die gesamte Materialstärke als auch bis auf beliebige Solltiefe eingesetzt werden. Dabei sind beim Schneidevorgang mit gemeinsamer Schnittlinie im Wechsel durchgehende Schnitte mit nicht durchgehenden bis auf Solltiefe Schnitten möglich. Als hocheffektiv erweist sich die Erfindung für durchgehende Schnitte von Glas mit Stärke 0,1 bis 20 mm, einschließlich bei der Glasverarbeitung. Außerdem sind Schneidvorgänge mit sich kreuzenden Schnittlinien ohne Verschlechterung der Schnittqualität in den Kreuzungspunkten möglich. Des Weiteren können sowohl einschichtige als auch verklebte Werkstoffpakete geschnitten werden, was besonders wichtig ist fürs Schneiden von Erzeugnissen wie Flachbildschirme (FPD) und Flüssigkristallbildschirme (LCD). Eine weitere Besonderheit der vorgestellten Erfindung sind durchgehende Schnitte sowohl im rechten Winkel als auch mit Neigungswinkel hinsichtlich der Werkstoffoberfläche. Letzteres ist besonders wichtig für das Schneiden von Rundscheiben und sonstigen kreisförmigen Teilen.

## Patentansprüche

1. Das Schneideverfahren von spröden NE-Werkstoffen mit Schnittlinieneinschnitt sowie zusätzlicher Einwirkung auf die Werkstoffoberfläche zeichnet sich dadurch aus, dass die zusätzliche Einwirkung auf die Werkstoffoberfläche im Einschnittbereich mit mindestens einer Quelle elastischer Wellen erfolgt, wobei die Wellenamplitude und -frequenz mit der Vorgabe gewählt werden, den Einschnitt um das Sollmaß zu vertiefen oder einen durchgehenden Schnitt auszuführen.

2. Die in Punkt 1 geschilderte Methode zeichnet sich dadurch aus, dass der Schnittlinieneinschnitt mittels Scheideisen erfolgt.

3. Die in Punkt 1 geschilderte Methode zeichnet sich dadurch aus, dass der Schnittlinieneinschnitt durch Erwärmung der Werkstoffoberfläche im Schnittlinienbereich mit Laserstrahl erfolgt.

4. Die in Punkt 3 geschilderte Methode zeichnet sich dadurch aus, dass nach erfolgter Erwärmung der Werkstoffoberfläche mit Laserstrahl im Schnittlinienbereich, der Erwärmungsbereich mit Kühlmittel herunter gekühlt wird, dabei wirken die elastischen Wellen im Kühlmittelzufuhrbereich ein.

5. Die in Punkt 1 geschilderte Methode zeichnet sich dadurch aus, dass der Schnittlinieneinschnitt durch Erwärmung der Werkstoffoberfläche im Schnittlinienbereich mit zwei Laserstrahlen erfolgt, die auf der Werkstoffoberfläche mit Sollabstand zueinander und im rechten Winkel hinsichtlich Laserstrahl- und Werkstoffbewegung positioniert sind.

6. Jede in Punkt 1 bis 5 geschilderte Methode zeichnet sich dadurch aus, dass die elastischen Wellen im Werkstoffvolumen und im Schnittlinieneinschnittbereich konzentriert werden.

7. Jede in Punkt 1 bis 5 geschilderte Methode zeichnet sich dadurch aus, dass als Quelle für elastische Wellen Impulslaserstrahlen eingesetzt werden, für die der Werkstoff nicht transparent ist.

8. Die in Punkt 2 geschilderte Methode zeichnet sich dadurch aus, dass als Schneide eine Diamantpyramide mit Schnittkante 70 bis 140 Winkelgrade eingesetzt wird.

9. Die in Punkt 2 geschilderte Methode zeichnet sich dadurch aus, dass als Schneide eine rotierende Hartmetallrolle mit Schliffwinkel 70 bis 140 Winkelgrade eingesetzt wird.

10. Jede in Punkt 1 bis 9 geschilderte Methode zeichnet sich dadurch aus, dass mit der elastischen Welle im Einschnittbereich erst nach erfolgtem Einschnittvorgang eingewirkt wird.

11. Jede in Punkt 1 bis 10 geschilderte Methode zeichnet sich dadurch aus, dass man die elastischen Wellen nur in vorgegebenen Werkstoffbereichen längs der Schnittlinie einwirken lässt.

12. Jede in Punkt 1 bis 11 geschilderte Methode zeichnet sich dadurch aus, dass die Wirklinie der Wellenquelle und die Einschnittlinie im rechten Winkel zur Werkstoffoberfläche gegeneinander versetzt sind.

13. Jede in Punkt 1 bis 12 geschilderte Methode zeichnet sich dadurch aus, dass gleichzeitig zwei elastische Wellen von der Einschnittseite und dem Einschnittwerkzeug folgend zu beiden Seiten der Schnittlinie konzentriert werden.

14. Die in Punkt 13 geschilderte Methode zeichnet sich dadurch aus, dass gleichzeitig eine elastische Welle im Werkstoffvolumen des Einschnittbereichs konzentriert wird, indem auf die gegenüberliegende Werkstoffoberseite in dem Bereich eingewirkt wird, der sich zwischen weiteren Einflussbereichen von zwei elastischen Wellen, die von der Einschnittseite konzentriert werden, befindet.

15. Das Schneideverfahren von NE-Werkstoffen mit Schnittlinieneinschnitt und nachträglicher Einwirkung auf die Werkstoffoberseite zeichnet sich dadurch aus, dass der Einschnitt durch Erwärmung der Werkstoffoberseite im Schnittlinienbereich mit Laserstrahl, der auf die Schnittlinie gelegt wird, und lokaler Kühlung des Erwärmungsbereiches ausgeführt wird, die nachträgliche Einwirkung auf die Werkstoffoberfläche aber mit nachfolgender Kühlmittelkühlung eines jeden Schnittlinienpunktes im Erwärmungsbereich erfolgt in einem Zeitraum, der der Erwärmungszeit dieses Punktes vergleichbar ist.

16. Die in Punkt 15 geschilderte Methode zeichnet sich dadurch aus, dass die Kühldauer je nach Stärke des Materials und nach seinen thermo-physikalischen Eigenschaften gewählt wird, um eine definierte Schnitttiefe zu erhalten
